# EUROPÄISCHE PATENTANMELDUNG

(11) **EP 4 513 747 A1**
(43) Veröffentlichungstag der Anmeldung: **26.02.2025**
(21) Anmeldenummer: 24191680.8
(22) Anmeldetag: 30.07.2024
(51) Int. Cl.: H02S 20/30, F24S 30/45

(54) **MONTAGEVORRICHTUNG, ANORDNUNG, SOLARMODULANORDNUNG UND ENERGIEANLAGE**

(30) Priorität: 03.08.2023 DE 102023120611
(71) Anmelder: Herbst, Marcel Quirilius, 21509 Glinde (DE)
(72) Erfinder: Herbst, Marcel Quirilius, 21509 Glinde (DE)
(74) Vertreter: Stork Bamberger Patentanwälte PartmbB

(57) **Zusammenfassung**

Die vorliegende Erfindung betrifft eine Montagevorrichtung (10) zur Anordnung mindestens eines flächigen Solarmoduls (11) zur Erzeugung elektrischer Energie und/oder thermischer Energie, umfassend ein Trägerelement (15), das zur Aufnahme mindestens eines flächigen Solarmoduls (11) ausgebildet und eingerichtet ist, zwei mit dem Trägerelement (15) gelenkig verbindbare Stützelemente (16), die zur Anordnung auf einem Untergrund (17) vorgesehen sind, wobei die zwei Stützelemente (16) jeweils eine unterschiedliche Stützhöhe (S_{H1}, S_{H2}) aufweisen, mindestens ein mit dem Trägerelement (15) gelenkig verbindbares Schwenkelement (18), das zur Anordnung auf einem Untergrund (17) vorgesehen ist, wobei das mindestens eine Schwenkelement (18) zum Verschwenken des Trägerelements (15) zwischen einer ersten Ausrichtung (19) und einer zweiten Ausrichtung (20) ausgebildet und zum Verändern einer Ausrichtung mindestens eines flächigen Solarmoduls (11) eingerichtet ist. Die Erfindung betrifft des Weiteren eine entsprechende Anordnung (12), eine Solarmodulanordnung (13) und eine Energieanlage (14).

## Beschreibung

Die Erfindung betrifft eine Montagevorrichtung zur Anordnung mindestens eines flächigen Solarmoduls zur Erzeugung elektrischer Energie und/oder thermischer Energie.

Weiter betrifft die Erfindung eine Anordnung umfassend zwei erfindungsgemäße Montagevorrichtungen.

Weiterhin betrifft die Erfindung eine Solarmodulanordnung umfassend mindestens eine erfindungsgemäße Anordnung. Des Weiteren betrifft die Erfindung eine Energieanlage zur Erzeugung elektrischer und/oder thermischer Energie.

Montagevorrichtungen für flächige Solarmodule, Anordnungen sowie Energieanlagen sind aus dem Stand der Technik seit vielen Jahren bekannt und dienen der Bereitstellung einer geeigneten Ausrichtung von Solarmodulen zur Energieerzeugung. Derartige Montagevorrichtungen sind in der Regel zur ortsfesten Anordnung von Solarmodulen vorgesehen, um eine sichere und dauerhafte Positionierung der jeweiligen Solarmodule zu gewährleisten. Zu diesem Zweck weisen die Montagevorrichtungen regelmäßig aus Profilen gebildete Halterungen auf, mit denen die Solarmodule fest miteinander verbunden werden können.

Derzeit werden Photovoltaik- oder Solarthermieanlagen auf Freiflächen, Flachdächern und landwirtschaftlich genutzten Flächen häufig starr in einer festen Ausrichtung zur Sonne montiert. Dabei werden die Solarmodule in der Regel möglichst nach Süden ausgerichtet. Alternativ ist eine Anordnung in Ost- oder West-Ausrichtung bekannt, um eine möglichst effiziente Nutzung der Sonneneinstrahlung in den Morgen- oder Abendstunden zu ermöglichen. Darüber hinaus sind Ost-West-Ausrichtungen bekannt, bei denen zwei Solarmodule sowohl in Ost- als auch in West-Ausrichtung zueinander angeordnet werden. Dieser aktuelle Stand der Technik weist jedoch einige wesentliche Nachteile auf, die die maximale Ausnutzung des Sonnenlichts und damit die Energieerzeugungskapazität der Anlagen beeinträchtigen. Einer der Hauptnachteile ist die begrenzte Kapazität zur Energieerzeugung. Fest installierte Solarmodule können sich nicht nach dem Sonnenstand ausrichten, was zu einer suboptimalen Energieausbeute führt, insbesondere in den Morgen- und Abendstunden, wenn die Sonne flacher am Himmel steht. Dadurch wird das volle Potenzial der Sonnenenergie nicht ausgeschöpft, was zu einer ineffizienten Nutzung der Solarmodule führt. Da Solarmodule jedoch einen erheblichen Kostenfaktor bei der Nutzung von Solarenergie darstellen, ist eine möglichst effiziente Nutzung der Solarenergie während des Tages zwingend erforderlich, um die notwendigen Investitionen zu amortisieren.

Ein weiterer wesentlicher Nachteil des Standes der Technik ist die Ausrichtungsabhängigkeit. Die Effizienz der Energieerzeugung solcher starren Systeme hängt stark von der festen Ausrichtung zur Sonne ab. Abweichungen von dieser Ausrichtung, sei es durch bauliche Gegebenheiten oder andere Faktoren, führen zu einem deutlichen Rückgang der Energieausbeute und reduzieren die Gesamtleistung der Solaranlage erheblich.

Um diesen Nachteil zu überwinden, wurden Nachführsysteme entwickelt, die die Solarmodule kontinuierlich zur Sonne ausrichten. Diese Nachführsysteme sind jedoch mit einem hohen zusätzlichen Investitionsaufwand verbunden. Die Anschaffung und Installation dieser komplexen Mechanismen ist kostenintensiv und kann die Gesamtkosten einer Solaranlage deutlich erhöhen. Dieser hohe Investitionsaufwand stellt eine Hürde dar, die potentielle Investoren von der Umsetzung von Nachführsystemen oder von der Realisierung ganzer Projekte zur Erzeugung erneuerbarer Energien abhalten kann.

Außerdem benötigen herkömmliche Nachführsysteme, die zur Steigerung des Energieertrags entwickelt wurden, oft viel Platz. Diese Nachführsysteme sind so konzipiert, dass sie die Solarmodule dem Lauf der Sonne folgen lassen, um eine optimierte Ausrichtung zu gewährleisten. Der Platzbedarf dieser Systeme stellt jedoch eine Herausforderung bei der Installation auf begrenzten Flächen wie Dächern dar und kann die Nutzungsmöglichkeiten solcher Standorte erheblich einschränken. Neben den finanziellen Belastungen und dem hohen Platzbedarf liegt ein weiterer Nachteil in dem hohen Strombedarf für den Betrieb von Nachführsystemen. Die kontinuierliche Nachführung der Solarmodule erfordert eine ständige Stromzufuhr, wodurch zusätzliche elektrische Energie verbraucht wird. Dieser zusätzliche Strombedarf kann sich negativ auf die Energiebilanz der Solaranlage auswirken, da ein Teil der erzeugten Energie für den internen Betrieb der Nachführsysteme verwendet wird, anstatt in das externe Stromnetz eingespeist zu werden.

Die technische Komplexität konventioneller Nachführsysteme stellt einen weiteren Nachteil dar. Diese Systeme beinhalten oft anspruchsvolle Mechanismen, die teuer in der Anschaffung und Wartung sind. Die hohe technische Komplexität erhöht die Wahrscheinlichkeit von Fehlfunktionen und Ausfallzeiten, die wiederum die Gesamtleistung des Solarsystems beeinträchtigen und zusätzliche Reparatur- und Wartungskosten verursachen.

Ein zusätzliches Problem, das sowohl bei starren Montagesystemen als auch bei Nachführsystemen auftritt, ist der Verschattungseffekt. Da die Solarmodule in einer festen Position verbleiben bzw. einen hohen Platzbedarf haben, kommt es z.B. bei einer Süd-Ausrichtung zu Verschattungen, wenn die Sonneneinstrahlung aus anderen Richtungen erfolgt. Dies hat zur Folge, dass die optimale Ausbeute der Sonnenenergie erheblich beeinträchtigt wird und der Ertrag der Solaranlage nicht das maximale Potential erreicht.

Die vorliegende Patentanmeldung zielt darauf ab, diese Nachteile des Standes der Technik zu überwinden. Es ist daher die Aufgabe der vorliegenden Erfindung, eine effiziente, kostengünstige und zugleich einfach zu installierende Lösung zur Optimierung der Energieerzeugung von Solarmodulen bereitzustellen.

Diese Aufgabe wird durch die eingangs genannte Montagevorrichtung gelöst, umfassend ein Trägerelement, das zur Aufnahme mindestens eines flächigen Solarmoduls ausgebildet und eingerichtet ist, zwei mit dem Trägerelement gelenkig verbindbare Stützelemente, die zur Anordnung auf einem Untergrund vorgesehen sind, wobei die zwei Stützelemente jeweils eine unterschiedliche Stützhöhe aufweisen, mindestens ein mit dem Trägerelement gelenkig verbindbares Schwenkelement, das zur Anordnung auf einem Untergrund vorgesehen ist, wobei das mindestens eine Schwenkelement zum Verschwenken des Trägerelements zwischen einer ersten Ausrichtung und einer zweiten Ausrichtung ausgebildet und zum Verändern einer Ausrichtung mindestens eines flächigen Solarmoduls eingerichtet ist.

Durch die erfindungsgemäße Vorrichtung wird sichergestellt, dass eine effektive Veränderung der Ausrichtung des Trägerelements zwischen der ersten und der zweiten Ausrichtung gegeben ist, während die eigentliche Montagevorrichtung, insbesondere die Stützelemente und das mindestens eine Schwenkelement, weiterhin ortsfest auf dem Untergrund verbleiben. Durch die Verschwenkbarkeit des mit den Stützelementen und dem mindestens einen Schwenkelement gelenkig verbindbaren Trägerelements ist es möglich, ein Solarmodul in verschiedenen Ausrichtungen, insbesondere bezüglich der Sonneneinstrahlung, anzuordnen, um somit jeweils eine möglichst effiziente Sonneneinstrahlung aufzunehmen bzw. abzubilden. Mit der bereitgestellten erfindungsgemä-ßen Lösung können sowohl bei elektrischer als auch bei thermischer Betrachtung Vorteile erzielt werden, wobei gleichzeitig der Platzbedarf und der technische Aufwand im Vergleich zu herkömmlichen Halterungen und Nachführsystemen reduziert werden. Die erfindungsgemäße Montagevorrichtung ermöglicht eine intelligente und flexible Anpassung der Solarmodule an die Bewegung der Sonne, ohne auf komplexe Mechanismen oder übermäßigen Platzbedarf zurückgreifen zu müssen. Auf diese Weise kann der zur Verfügung stehende Flächenbedarf optimal ausgenutzt werden, um auf identischer Fläche mit Hilfe der erfindungsgemäßen Montagevorrichtung das Potenzial zur Steigerung der Energieeffizienz und des Wirkungsgrades von photovoltaischen und thermischen Anlagen deutlich zu erhöhen. Die Effizienz der Energiegewinnung von Solarmodulen wird dadurch entscheidend verbessert. Durch eine intelligente, flexible und technisch weniger aufwändige Lösung maximiert die erfindungsgemäße Montagevorrichtung den Ertrag der Solarenergieerzeugung und reduziert die Abhängigkeit von festen Ausrichtungen. Insgesamt kann dadurch ein erheblicher Kostenvorteil gegenüber bekannten Halterungen oder Nachführsystemen erreicht werden, wodurch die Rendite entsprechender Anlagen deutlich erhöht werden kann und sich wirtschaftliche und energetische Vorteile ergeben.

Unter einem "Trägerelement" im Sinne der Erfindung sind sämtliche Haltevorrichtungen zu verstehen, die zur Anordnung mindestens eines Solarmoduls geeignet sind. Die Trägerelemente weisen hierzu Aufnahmemittel auf, um das mindestens eine Solarmodul mit dem Trägerelement zu verbinden. Ferner weisen die Trägerelemente entsprechende Mittel auf, um eine Verbindung zwischen dem Trägerelement und den Stützelementen bzw. dem mindestens einen Schwenkelement auszubilden und einzurichten. In einer vorteilhaften Ausführungsform ist jedes der Trägerelemente zur Anordnung genau eines Solarmoduls ausgebildet, wobei die Abmessungen des Trägerelements im Wesentlichen den Abmessungen des Solarmoduls entsprechen. In weiteren vorteilhaften Ausführungsformen können die Trägerelemente zur Anordnung mehrerer Solarmodule ausgebildet und eingerichtet sein, indem die Trägerelemente in ihrer Größe entsprechend skaliert sind. Vorzugsweise sind auch die Stützelemente bzw. das mindestens eine Schwenkelement hinsichtlich Größe, Tragfähigkeit etc. entsprechend angepasst. Derartige Trägerelemente sind auch unter den Begriffen Halteelemente, Rahmenelemente, Montageelemente etc. bekannt. In einer vorteilhaften Ausgestaltung kann das Trägerelement zumindest teilweise in das mindestens eine flächige Solarmodul integriert sein, so dass das Stützelement und/oder das mindestens eine Schwenkelement mit dem Trägerelement des mindestens eines Solarmoduls verbindbar sind.

Durch die vorgegebene Neigung des Trägerelements besteht zudem die Möglichkeit, durch Veränderung der Ausrichtung die Schneemassenanhäufung zu reduzieren und ihr aktiv entgegenzuwirken. Vorzugsweise ist die Neigung des Trägerelements durch die Höhe der Stützelemente bzw. des mindestens einen Schwenkelements relativ zueinander einstellbar und/oder veränderbar ausgebildet und eingerichtet. Hierzu können die Stützelemente und/oder das mindestens eine Schwenkelement höhenverstellbar ausgebildet sein, um eine Einstellbarkeit der Neigung des Trägerelements einzurichten.

Eine zweckmäßige Ausgestaltung der Erfindung ist dadurch gekennzeichnet, dass die Montagevorrichtung mindestens zwei Schwenkelemente umfasst, wobei die mindestens zwei Schwenkelemente gelenkig mit dem Trägerelement verbindbar ausgebildet und eingerichtet sind. Bevorzugt umfasst die Montagevorrichtung genau zwei Schwenkelemente, die jeweils gelenkig mit dem Trägerelement oder einem flächigen Solarmodul verbindbar sind. Durch mindestens zwei Schwenkelemente ist eine erhöhte Stabilität gegeben und zudem ist für eines der Schwenkelemente ein Widerlager vorhanden, um die Veränderung der Ausrichtung unterstützend auszubilden. Sofern zwei Schwenkelemente vorgesehen sind, sind diese vorzugsweise symmetrisch zueinander und insbesondere symmetrisch zu den mindestens zwei Stützelementen an dem Trägerelement anordenbar.

Eine bevorzugte Ausführungsform ist dadurch gekennzeichnet, dass die Stützelemente im Wesentlichen orthogonal zum anzuordnenden Untergrund ausgebildet und eingerichtet sind und/oder dass die Stützelemente im Wesentlichen starr ausgebildet und eingerichtet sind. Dadurch kann das mindestens eine Schwenkelement vielseitig auf unterschiedlichen Untergründen eingesetzt und leicht an die jeweiligen Gegebenheiten angepasst werden. Zudem ist eine vereinfachte Anpassung an den Sonnenstand gegeben, da durch die im Wesentlichen orthogonale Anordnung Bezugspunkte vorhanden sind. Durch die starre Ausführung der Stützelemente ist eine hohe Stabilität und Robustheit gewährleistet. Unerwünschte Bewegungen oder Instabilitäten beim Schwenken werden vermieden und das jeweilige Schwenkelement kann hohen Belastungen standhalten. Die Kombination dieser Eigenschaften macht diese Ausführungsform zu einer zuverlässigen und vielseitigen Lösung für präzise Längenänderungen und Bewegungssteuerungen in verschiedenen Einsatzgebieten.

Eine vorteilhafte Weiterbildung zeichnet sich dadurch aus, dass das mindestens eine Schwenkelement auf dem Untergrund schwenkbar gelagert anordenbar ist, um eine zweiachsige Verschwenkbarkeit des mindestens einen Schwenkelements auszubilden und einzurichten. Auf diese Weise wird beispielsweise eine beidseitige Schwenkbarkeit zweier Schwenkelemente ermöglicht. Diese Flexibilität eröffnet zudem zahlreiche Einsatzmöglichkeiten und erhöht die Vielseitigkeit der Montagevorrichtung zur Ausbildung unterschiedlicher Ausrichtungen des Trägerelements erheblich. Die Möglichkeit, das mindestens eine Schwenkelement auf dem Untergrund zu verschwenken und damit das Trägerelement in verschiedenen Ausrichtungen anzuordnen, ermöglicht einerseits die Anpassung der Montagevorrichtung an spezifische Anforderungen und Gegebenheiten und andererseits die bedarfsgerechte Verschwenkung mindestens eines flächigen Solarmoduls. Je nach Bedarf kann die Ausbildung und Konfiguration der zweiachsigen Schwenkbarkeit angepasst werden, so dass eine optimale Nutzung und Anpassungsfähigkeit gewährleistet ist.

In einer weiteren vorteilhaften Ausgestaltung umfasst die Montagevorrichtung weiter mindestens eine Koppeleinrichtung, insbesondere vier Koppeleinrichtungen, wobei die mindestens eine Koppeleinrichtung zum gelenkigen Verbinden eines distalen Endes der Stützelemente und/oder des mindestens einen Schwenkelements mit dem Trägerelement und/oder einem Untergrund ausgebildet und eingerichtet ist/sind. Somit ist das distale Ende der Stützelemente und/oder des mindestens einen Schwenkelements zuverlässig und gelenkig mit dem Trägerelement und/oder einem Untergrund verbindbar. Diese Kupplungseinrichtungen bilden eine flexible Verbindung, die es ermöglicht, die Stützelemente und/oder das mindestens eine Schwenkelement auf effiziente und sichere Art und Weise mit dem Trägerelement oder dem Untergrund zu verbinden. Das Vorhandensein mehrerer Koppeleinrichtungen schafft mehr Flexibilität und erhöht die Stabilität der Montagevorrichtung. Die einzelnen Komponenten der Montagevorrichtung können optimal ausgerichtet und in verschiedenen Konfigurationen miteinander verbunden werden, je nach den spezifischen Anforderungen der jeweiligen Anwendung. Dies ermöglicht eine erhöhte Variabilität bei der Verwendung der Montagevorrichtung, insbesondere bei einer entsprechend vorgesehenen Ausrichtung mindestens eines flächigen Solarmoduls, und trägt dazu bei, dass die Montagevorrichtung an unterschiedliche Umgebungen und Anwendungsfälle angepasst werden kann.

Eine zweckmäßige Ausgestaltung der Erfindung ist dadurch gekennzeichnet, dass die mindestens eine Koppeleinrichtung jeweils als mindestens ein Schwenkgelenk ausgebildet und eingerichtet ist, wobei das Trägerelement, die Stützelemente, das mindestens eine Schwenkelement und/oder der Untergrund jeweils mindestens einen Schwenkkörper oder eine zur Anordnung des Schwenkkörpers vorgesehene Schwenckörperaufnahme aufweisen, wobei der Schwenkkörper oder die Schwenkkörperaufnahme an den Stützelementen und/oder an dem mindestens einen Schwenkelement an mindestens einem der distalen Enden angeordnet ist. Die Gestaltung der Koppeleinrichtung als mindestens ein Schwenkgelenk gewährleistet eine vielseitige Verstellbarkeit des mindestens einen Schwenkelements, wodurch die gesamte Montagevorrichtung an die vorgesehenen Ausrichtungen und Einsatzbereiche angepasst werden kann. Durch die Verwendung von Schwenkgelenken kann das mindestens eine Schwenkelement bedarfsgerecht bewegt werden, wodurch eine optimale Positionierung des jeweiligen Trägerelementes sichergestellt wird. Dies ermöglicht eine effiziente Nutzung der Montagevorrichtung, die beispielsweise für eine entsprechend effiziente Ausrichtung von flächigen Solarmodulen geeignet ist. Damit ist eine hohe Flexibilität und Anpassungsfähigkeit gegeben, um die Montagevorrichtung optimal an die spezifischen Anforderungen und Gegebenheiten anzupassen, was deren Funktionalität und Effizienz deutlich erhöht.

Gemäß einer weiteren bevorzugten Ausführungsform der Erfindung ist mindestens eines der Schwenkgelenke als Kugelgelenk ausgebildet und eingerichtet. Dies erhöht zusätzlich die Flexibilität und Beweglichkeit bei der Änderung der Ausrichtung des Trägerelementes. Die Kugelgelenke ermöglichen eine freie Drehung von maximal 360° in verschiedene Richtungen, was eine äußerst vielseitige Anwendung und eine präzise Ausrichtung des Trägerelements bzw. des mindestens einen Schwenkelements ermöglicht.

Eine weitere zweckmäßige Ausgestaltung der Erfindung ist dadurch gekennzeichnet, dass mindestens eines der Schwenkelemente zur Längenänderung entlang der Längsausrichtung des jeweiligen Schwenkelements ausgebildet und eingerichtet ist, wobei bei der Längenänderung mindestens eines der Schwenkelemente eine Änderung der Ausrichtung des Trägerelements ausführbar ist. Durch die vorgesehene Längenänderung wird eine präzise Einstellung der Position und Ausrichtung des Trägerelementes erreicht. Durch die Möglichkeit der Längenänderung mindestens eines der Schwenkelemente werden neue Anwendungsmöglichkeiten eröffnet und die Funktionalität der Montagevorrichtung erweitert. Durch die Veränderung der Ausrichtung des Trägerelements können verschiedene Arbeitswinkel und Konfigurationen erreicht werden, um eine entsprechende Einstellbarkeit des mindestens einen flächigen Solarmoduls zu ermöglichen.

Eine besonders vorteilhafte Ausführungsform des mindestens einen Schwenkelements zur Längenänderung besteht darin, dass es die Längenänderung mittels mindestens eines Kolbenzylinders ermöglicht, der insbesondere elektrisch, hydraulisch und/oder pneumatisch betätigbar ist. Dadurch ist das mindestens eine Schwenkelement flexibel und kann optimal an die spezifischen Anforderungen verschiedener Anwendungen angepasst werden. Darüber hinaus bietet das mindestens eine Schwenkelement eine alternative Ausführungsform, bei der die Längenänderung durch den Einsatz von Gewindestangen realisierbar ist. Diese Option ermöglicht eine präzise und gleichmäßige Bewegungssteuerung, insbesondere in Situationen, in denen eine hohe Genauigkeit erforderlich ist. Die Verwendung dieser beiden Techniken - Kolbenzylinder und Gewindestangen - einzeln oder in Kombination verleiht dem mindestens einen Schwenkelement eine sehr vielseitige Verwendbarkeit. Es kann sowohl in Anwendungen mit hohen Kräften und Geschwindigkeiten als auch in Situationen, in denen eine präzise und kontrollierte Bewegung erforderlich ist, eine optimierte Wirkungsweise bieten.

Eine bevorzugte Weiterbildung der Erfindung zeichnet sich dadurch aus, dass bei einer Längenänderung des einen Schwenkelements automatisch eine Längenänderung des weiteren Schwenkelements erfolgt, wobei die eine Längenänderung eine Längenverkürzung des Schwenkelements und die andere Längenänderung eine Längenverlängerung des weiteren Schwenkelements bewirkt. Dies ist insbesondere bei dem Vorhandensein von zwei Schwenkelementen gegeben. Diese automatische Längenanpassung ist vorteilhaft, da sie eine komfortable und synchronisierte Einstellung der Schwenkelemente ermöglicht. Eine Längenänderung des einen Schwenkelementes führt automatisch zu einer Längenverkürzung des anderen Schwenkelementes. Durch diese automatische Kopplung der Längenänderung wird die Ausrichtung und Stabilität des Trägerelementes optimiert und eine bedarfsgerechte Regelung eines anzuordnenden flächigen Solarmoduls ermöglicht. Wird ein Schwenkelement verkürzt, verlängert sich das andere, so dass eine gleichzeitige und ausgeglichene Anpassung erfolgt. Dies gewährleistet eine präzise und gleichmäßige Bewegung der Schwenkelemente und erhöht die einfache Bedienbarkeit der Montagevorrichtung.

Eine zweckmäßige Ausgestaltung der Erfindung ist dadurch gekennzeichnet, dass die Montagevorrichtung mindestens ein Steuerelement umfasst, das dazu ausgebildet und eingerichtet ist, die Längenänderung mindestens eines der Schwenkelemente, insbesondere der zwei Schwenkelemente gleichzeitig, derart zu steuern, dass das Trägerelement zumindest zwischen der ersten Ausrichtung und der zweiten Ausrichtung veränderbar ist. Durch dieses Steuerelement kann das Trägerelement durch entsprechende Steuerbefehle zwischen der ersten Ausrichtung und der zweiten Ausrichtung verändert werden. Diese Ausführung bietet den Vorteil einer zentralen und synchronisierten Steuerung der Längenänderung des mindestens einen Schwenkelements, um eine entsprechende Änderung der Ausrichtung des Trägerelements zu bewirken. Das Steuerelement ermöglicht die präzise und gleichzeitige Einstellung der gewünschten Positionierung und Ausrichtung des Trägerelements, indem es die Längenänderung des mindestens einen Schwenkelements koordiniert. Durch diese zentralisierte Steuerung wird die Handhabung der Montagevorrichtung vereinfacht und der Wechsel zwischen der ersten und der zweiten Ausrichtung des Trägerelements erfolgt noch effizienter und automatisierbarer. Dies erhöht die Gesamtleistung und Funktionalität der Montagevorrichtung bzw. der Solarmodule und ermöglicht eine optimale Nutzung in verschiedenen Ausrichtungen. Vorzugsweise ist das Steuerelement ein elektronisches Steuerelement, das zur automatischen Steuerung des mindestens einen Schwenkelements ausgebildet und eingerichtet ist. Weiter bevorzugt erfolgt eine automatische Steuerung in Abhängigkeit des Sonnenstandes, der Tageszeit, der Sonnenintensität und/oder einer Kombination daraus. In einer weiteren bevorzugten Ausführungsform umfasst das Steuerelement mindestens ein Steuersensorelement. Vorzugsweise steht das mindestens eine Steuersensorelement in Wirkverbindung mit dem Steuerelement, um eine automatische und/oder automatisierte Steuerung in Abhängigkeit externer Einflüsse auszubilden und einzurichten. Die externen Einflüsse sind insbesondere der Sonnenstand, die Tageszeit, die Sonnenintensität und/oder einer Kombination daraus. Dazu kann mindestens eines der Steuersensorelemente als Fotosensor, als Zeiterfassungssensor etc. ausgebildet sein.

Eine vorteilhafte Weiterbildung zeichnet sich dadurch aus, dass die Montagevorrichtung weiter mindestens ein Sensorelement umfasst, wobei das mindestens eine Sensorelement zur Erfassung der jeweiligen Ausrichtung des Trägerelements und/oder des Verschwenkens mindestens eines der Schwenkelemente ausgebildet und eingerichtet ist. Durch die Integration eines oder mehrerer Sensorelemente erhält die Montagevorrichtung die Fähigkeit, wichtige Parameter zu messen und zu überwachen. Das Vorhandensein mindestens eines Sensorelementes ermöglicht die genaue Erfassung der Position und Ausrichtung des Trägerelementes und indirekt auch des flächigen Solarmoduls sowie des mindestens einen Schwenkelements. Dadurch wird sichergestellt, dass die gewünschte Ausrichtung und Bewegung exakt und zuverlässig erfolgt. Die Sensoren können Echtzeitdaten liefern, um die Steuerung der Montagevorrichtung zu optimieren und eine genaue Rückmeldung über die aktuellen Zustände zu geben. Der Einsatz von Sensorelementen erhöht die Funktionalität und Effizienz der Montagevorrichtung erheblich. Durch die Erfassung von Ausrichtung und Bewegung kann die Montagevorrichtung automatisch reagieren und sich an sich verändernde Bedingungen anpassen. Dies erhöht die Genauigkeit und Sicherheit der Anwendung und ermöglicht eine effektive Nutzung und damit eine erhöhte Energieausbeute. Dies wiederum führt zu einer optimierten Funktionalität, Präzision und Anpassungsfähigkeit der Montagevorrichtung und macht sie zu einer leistungsfähigen Lösung im Bereich der Energieerzeugung durch flächige Solarmodule.

In einer weiteren bevorzugten Weiterbildung der Erfindung ist die Montagevorrichtung derart an einem Untergrund anordenbar, dass eine Veränderung des Trägerelements zwischen der ersten Ausrichtung und der zweiten Ausrichtung jeweils mit einer Veränderung zwischen einer Süd- und einer Ost-Ausrichtung oder zwischen einer Süd- und einer West-Ausrichtung korrespondiert. Auf diese Weise wird eine Möglichkeit zur effizienten Verwendung einer derartigen Montagevorrichtung bereitgestellt, die eine maximierte Energieausbeute gewährleistet. Die Montagevorrichtung kombiniert die Vorteile einer Süd- und einer Ost-West-Ausrichtung. Bei einer nach Süden ausgerichteten Anlage haben die Solarmodule während der Hauptzeit des Tages die beste Ausrichtung zur Sonne und liefern somit die höchste Leistung. Bei einer Ost-West-Ausrichtung profitieren die Module morgens von der Sonneneinstrahlung im Osten und nachmittags von der Sonneneinstrahlung im Westen. Dies führt zu einer längeren und gleichmäßigeren Energieproduktion über den Tag verteilt.

In einer weiteren vorteilhaften Ausgestaltung der Erfindung ist eine automatische und/ oder automatisierbare Steuerung des mindestens einen Schwenkelements derart ausführbar, dass eine in Abhängigkeit von Sonnenstand und/oder Tageszeit vorgesehene Veränderung des Trägerelements zwischen der ersten Ausrichtung und der zweiten Ausrichtung ausbildbar ist. Eine derartige Steuerung ist insbesondere durch ein bevorzugtes elektrisches bzw. elektronisches Steuerelement vorgesehen, um eine bedarfsgerechte Steuerung des entsprechenden mindestens einen Schwenkelements auszubilden und einzurichten.

Eine weitere zweckmäßige Ausgestaltung der Erfindung ist dadurch gekennzeichnet, dass die Montagevorrichtung weiter mindestens einen zur Anordnung auf einem Untergrund vorgesehenen Grundkörper umfasst, wobei der Grundkörper zur Anordnung mindestens eines Stützelements und/oder mindestens eines Schwenkelements ausgebildet ist. Dieser Grundkörper bildet eine tragfähige und stabile Basis, die eine zuverlässige Struktur und Stabilität gewährleistet. Der Grundkörper ist so ausgelegt, dass er mindestens ein Stützelement und/oder mindestens ein Schwenkelement aufnehmen kann, um diese entsprechend miteinander zu verbinden. Die Verwendung eines geeigneten Grundkörpers ermöglicht eine standsichere Montage der Stütz- und Schwenkelemente. Die Anordnung auf einem Untergrund gewährleistet eine stabile Verbindung und eine sichere Basis für die gesamte Montagevorrichtung. Dadurch wird unter anderem die Stabilität erhöht, was besonders wichtig ist, um die Zuverlässigkeit und Präzision der Montagevorrichtung zu gewährleisten. Durch die Integration des Grundkörpers in die Montagevorrichtung wird eine robuste Struktur geschaffen, die den verschiedenen Belastungen und Beanspruchungen während der Verwendung widersteht. Dies trägt zur Langlebigkeit und Effizienz der Montagevorrichtung bei und ermöglicht einen sicheren Einsatz in verschiedenen Umgebungen und Anwendungen.

Eine vorteilhafte Weiterbildung der Erfindung zeichnet sich dadurch aus, dass der Grundkörper mindestens ein Beschwerungselement und/oder mindestens ein zur Befestigung an einem Untergrund vorgesehenes Verankerungselement umfasst. Durch das mindestens eine Beschwerungselement und/oder das mindestens eine Verankerungselement wird ein einfacher, aber wirksamer Lösungsvorschlag für eine zuverlässige Bewegungssicherung der Montagevorrichtung bereitgestellt.

Die Aufgabe wird auch durch die eingangs genannte Anordnung gelöst, umfassend zwei erfindungsgemäße Montagevorrichtungen, wobei die Montagevorrichtungen jeweils zur Befestigung mindestens eines flächigen Solarmoduls ausgebildet und eingerichtet sind. Auf diese Weise ist eine automatische Ausrichtung von Ost nach Süd und von Süd nach West realisierbar. Dadurch ist mittels der einen Montagevorrichtung bei einer Anordnung von mindestens einem Solarmodul die morgendliche Sonneneinstrahlung und mittels der anderen Montagevorrichtung mit mindestens einem Solarmodul auch die abendliche Sonneneinstrahlung ausnutzbar, während mittels beider Montagevorrichtungen mit mindestens einem Solarmodul auch die maximale Leistung der Mittagssonne ausnutzbar ist. Um die maximale Leistung der Mittagssonne einzufangen, drehen sich die Montagevorrichtungen entlang ihrer Höhenachse mit der Sonne nach Süden. Mit abnehmender Sonneneinstrahlung drehen sich die Montagevorrichtungen bzw. die Anordnung wieder in die Ost-West-Ausrichtung.

Zur Vermeidung von Wiederholungen wird im Zusammenhang mit der erfindungsgemäßen Anordnung insbesondere auf die bereits im Zusammenhang mit der erfindungsgemäßen Montagevorrichtung im Detail dargelegten Vorteile verwiesen. Diese gelten in analoger Weise auch für die nachfolgend beschriebene erfindungsgemäße Anordnung.

Eine weitere zweckmäßige Ausgestaltung der Erfindung ist dadurch gekennzeichnet, dass die zwei Montagevorrichtungen im Wesentlichen gegenüberliegend angeordnet sind, derart, dass eine Veränderung des Trägerelements der ersten Montagevorrichtung zwischen einer ersten Ausrichtung und einer zweiten Ausrichtung jeweils mit einer Veränderung zwischen einer Süd- und einer Ost-Ausrichtung ausgebildet und eingerichtet ist, und dass eine Veränderung des Trägerelements der zweiten Montagevorrichtung zwischen einer ersten Ausrichtung und einer zweiten Ausrichtung jeweils mit einer Veränderung zwischen einer Süd-Ausrichtung und einer West-Ausrichtung ausgebildet und eingerichtet ist, um eine Veränderung der Trägerelemente zwischen einer Süd-Ausrichtung und einer Ost-West-Ausrichtung auszubilden und einzurichten. Dies führt zu einer besseren Ausbeute der zur Anordnung vorgesehenen Solarmodule und damit zu einem höheren potenziellen Energieertrag. Im Gegensatz zu bestehenden Nachführsystemen wird eine starke Verschattung vermieden und die zur Verfügung stehende Fläche effektiver genutzt. Eine der Montagevorrichtungen folgt der Sonne jeweils nur halbtags (Ost-Süd oder Süd-West), weshalb für eine vollständige Ost-Süd-West-Ausrichtung zwei entsprechend zueinander angeordnete Montagevorrichtungen erforderlich sind, in den Morgen- und Abendstunden befinden sich die Montagevorrichtungen in Ost-West-Ausrichtung, wodurch eine Verschattung potenzieller Solarmodule in der Reihe vermieden wird und diese somit dichter nebeneinander aufgestellt werden können.

Die Aufgabe wird auch durch die eingangs genannte Solarmodulanordnung gelöst, umfassend mindestens eine erfindungsgemäße Anordnung und mindestens zwei Solarmodule zur Erzeugung elektrischer Energie und/oder thermischer Energie, wobei die Solarmodule zwischen einer Süd- und einer West-Ausrichtung oder zwischen einer Süd- und einer Ost-Ausrichtung veränderlich ausgebildet und eingerichtet sind.

Zur Vermeidung von Wiederholungen wird im Zusammenhang mit der erfindungsgemäßen Solarmodulanordnung insbesondere auch auf die bereits im Zusammenhang mit der erfindungsgemäßen Montagevorrichtung sowie der erfindungsgemäßen Anordnung im Detail beschriebenen Vorteile verwiesen. Diese gelten analog auch für die erfindungsgemäße Solarmodulanordnung.

Weiter wird die Aufgabe auch durch die eingangs genannte Energieanlage gelöst, umfassend eine Mehrzahl von miteinander in Wirkverbindung stehender erfindungsgemäßer Solarmodulanordnungen. Dies ermöglicht insbesondere eine höhere Dichte von Solarmodulanordnungen auf gleicher Fläche bei gleichzeitiger weiterer Steigerung der Energieausbeute durch die Veränderbarkeit der Ausrichtung der entsprechenden Solarmodule.

Zur Vermeidung von Wiederholungen wird im Zusammenhang mit der erfindungsgemäßen Energieanlage insbesondere auch auf die bereits im Zusammenhang mit der erfindungsgemäßen Montagevorrichtung, der erfindungsgemäßen Anordnung sowie der erfindungsgemäßen Solarmodulanordnung im Detail beschriebenen Vorteile verwiesen. Diese gelten analog auch für die erfindungsgemäße Energieanlage.

Weitere zweckmäßige und/oder vorteilhafte Merkmale und Weiterbildungen sowie bevorzugte Vorrichtungsgegenstände ergeben sich aus den Unteransprüchen und der Beschreibung. Besonders bevorzugte Ausführungsformen der erfindungsgemäßen Montagevorrichtung, der Anordnung, der Solarmodulanordnung sowie der Energieanlage werden anhand der beigefügten Zeichnungen näher erläutert. In den Zeichnungen zeigen:
- Fig. 1: eine schematische Darstellung der Vorderseite einer erfindungsgemäßen Montagevorrichtung mit einem flächigen Solarmodul in einer ersten Ausführungsform,
- Fig. 2: eine schematische Darstellung der Rückseite einer erfindungsgemäßen Montagevorrichtung mit einem flächigen Solarmodul in einer zweiten Ausführungsform,
- Fig. 3: eine perspektivische Darstellung der in Fig. 1 gezeigten erfindungsgemäßen Montagevorrichtung,
- Fig. 4: eine perspektivische Darstellung einer Ausführungsform einer erfindungsgemäßen Anordnung mit zwei der in Fig. 2 gezeigten Ausführungsform einer Montagevorrichtung,
- Fig. 5: eine perspektivische Darstellung einer weiteren Ausführungsform einer erfindungsgemäßen Anordnung mit zwei der in Fig. 1 gezeigten Ausführungsform einer Montagevorrichtung und
- Fig. 6: eine perspektivische Darstellung zweier weiterer Ausführungsformen einer erfindungsgemäßen Montagevorrichtung sowie einer weiteren Ausführungsform einer erfindungsgemäßen Anordnung mit einer Mehrzahl von flachen Solarmodulen sowie ohne Solarmodule.

Anhand der vorgenannten Figuren wird die erfindungsgemäße Montagevorrichtung 10 zur Anordnung mindestens eines flächigen Solarmoduls 11 zur Erzeugung elektrischer Energie und/oder thermischer Energie, die erfindungsgemäße Anordnung 12 umfassend zwei erfindungsgemäße Montagevorrichtungen 10, die erfindungsgemäße Solarmodulanordnung 13 sowie die erfindungsgemäße Energieanlage 14 näher beschrieben.

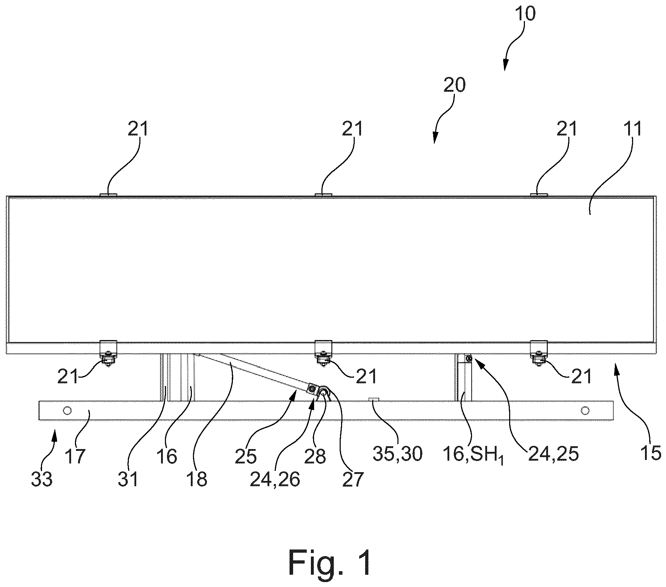

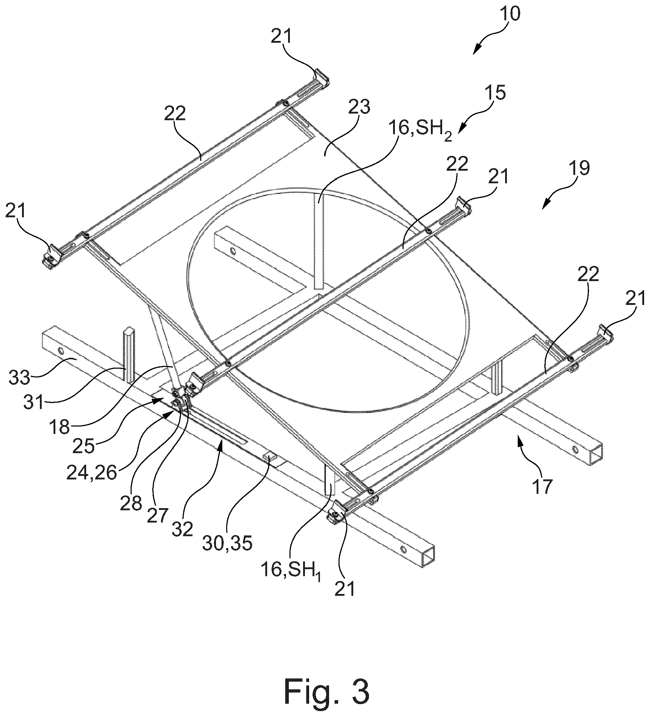

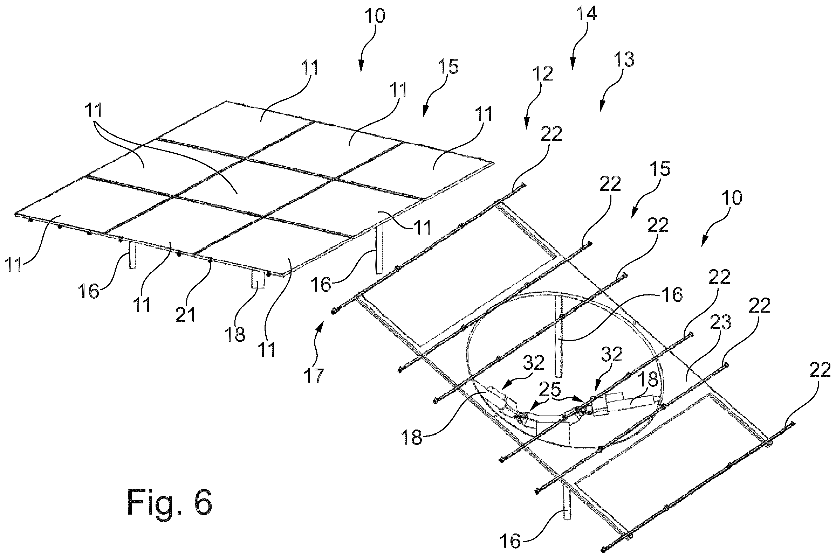

Die in den Zeichnungen dargestellte Montagevorrichtung 10 zur Anordnung mindestens eines flächigen Solarmoduls 11 zur Erzeugung elektrischer Energie und/oder thermischer Energie ist exemplarisch als Montagevorrichtung 10 zur Befestigung von PV-Modulen ausgebildet. Die in den Fig. 1 bis Fig. 5 gezeigten Ausführungsformen sind jeweils zur Anordnung eines Solarmoduls 11 ausgebildet, während die in Fig. 6 gezeigte Ausführungsform der Montagevorrichtung 10 zur Anordnung von neun Solarmodulen 11 ausgebildet ist. Die Erfindung bezieht sich in gleicher Weise auf vergleichbare Montagevorrichtung 10 zur thermischen Energieerzeugung sowie auf Montagevorrichtungen 10 zur Anordnung einer unterschiedlichen Anzahl an Solarmodulen 11.

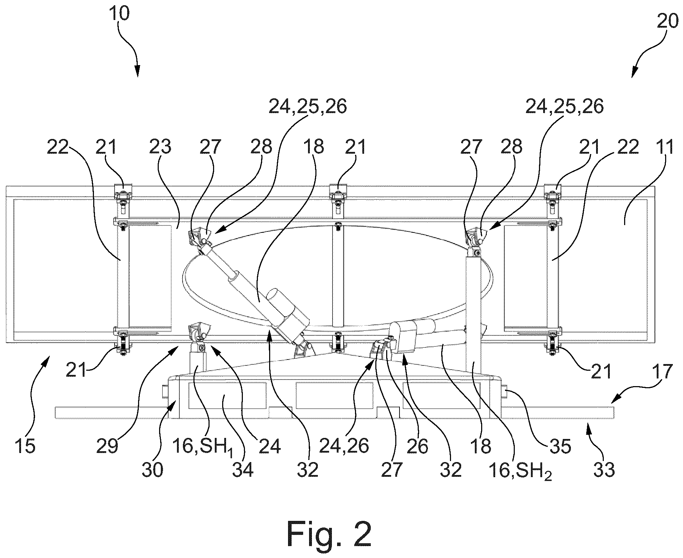

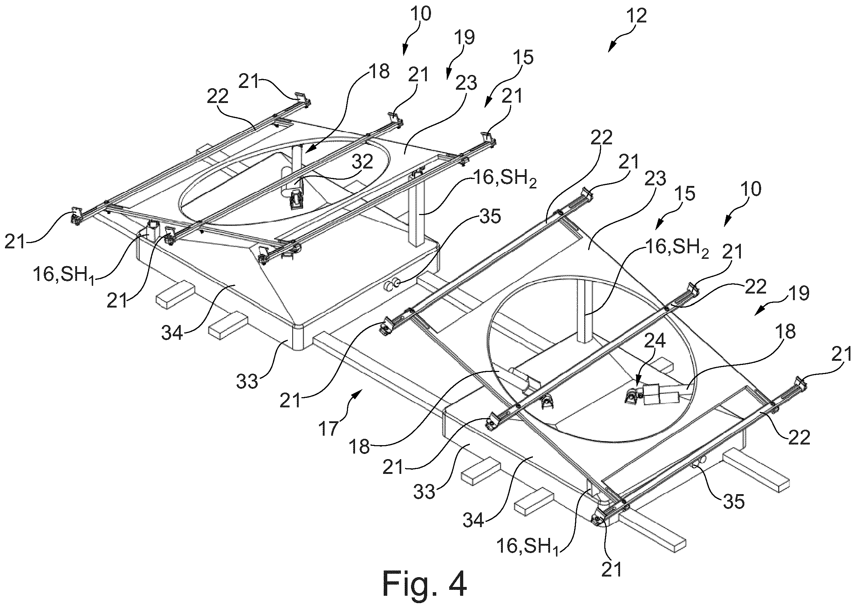

Die Fig. 1, Fig.3 und Fig.5 zeigen schematisch eine erste Ausführungsform, Fig. 2 und Fig. 4 zeigen eine zweite Ausführungsform und Fig. 6 zeigt eine dritte Ausführungsform einer erfindungsgemäßen Montagevorrichtung 10, umfassend ein Trägerelement 15, das zur Aufnahme mindestens eines flächigen Solarmoduls 11 ausgebildet und eingerichtet ist. Die Montagevorrichtung 10 umfasst jeweils zwei mit dem Trägerelement 15 gelenkig verbindbare Stützelemente 16, die zur Anordnung auf einem Untergrund 17 vorgesehen sind, wobei die zwei Stützelemente 16 jeweils eine unterschiedliche Stützhöhe S_{H1}, S_{H2} aufweisen. Der Untergrund 17 ist nicht zwingend vorgegeben und kann z. B. eine Befestigungseinrichtung, ein Flachdach, eine Freifläche o. ä. sein. Die Montagevorrichtung 10 umfasst weiter mindestens ein mit dem Trägerelement 15 gelenkig verbindbares Schwenkelement 18, das zur Anordnung auf einem Untergrund 17 vorgesehen ist, wobei das mindestens eine Schwenkelement 18 zum Verschwenken des Trägerelements 15 zwischen einer ersten Ausrichtung 19 und einer zweiten Ausrichtung 20 ausgebildet und zum Verändern einer Ausrichtung mindestens eines flächigen Solarmoduls 11 eingerichtet ist.

Die Ausführungsformen der in den Fig. 1 bis Fig. 5 gezeigten Montagevorrichtung 10 ist vorzugsweise für (Flach-)Dächer vorgesehen, während die in der Fig. 6 dargestellte Ausführungsform der Montagevorrichtung 10 bevorzugt für eine Freiflächenanlage geeignet ist.

Das flächige Solarmodul 11 ist vorzugsweise mittels das Trägerelement 15 umfassender Halteelemente 21 an mindestens zwei Haltepunkten, bevorzugt an vier Haltepunkten, besonders bevorzugt an sechs Haltepunkten an mindestens einer das Trägerelement 15 weiter umfassenden Haltestrebe 22 befestigbar. Das Trägerelement 15 umfasst ferner bevorzugt mindestens eine Trägerplatte 23 bzw. ist weiter bevorzugt als mindestens eine Trägerplatte 23 ausgebildet, die zur Anordnung des mindestens einen flächigen Solarmoduls 11 und/oder zur Verbindung mit den Stützelementen 16 und/ oder dem mindestens einen Schwenkelement 18 ausgebildet und eingerichtet ist. Die mindestens eine Haltestrebe 22, vorzugsweise mindestens zwei Haltestreben 22, und die mindestens eine Trägerplatte 23 erlauben es, unterschiedliche Größen und Stückzahlen von flächigen Solarmodulen 11 auf dem Trägerelement fixiert anzuordnen. Vorzugsweise ist die Trägerplatte 23 an zwei in der Höhe (S_{H}) verstellbaren Befestigungspunkten mit den vorzugsweise (manuell) höhenverstellbaren Stützelementen gelenkig verbindbar, um eine entsprechend winklige Anordnung des Trägerelements 15 bzw. des darauf anzuordnenden mindestens einen flächigen Solarmoduls 11 auszubilden und einzurichten.

Die Ausführungsform der Montagevorrichtung 10 der Fig. 1, Fig.3 und Fig.5 weist ein Schwenkelement 18 auf, um ein Verschwenken des Trägerelements 15 zwischen der ersten Ausrichtung 19 und der zweiten Ausrichtung 20 auszubilden. Wie in der Fig. 2 und Fig. 4 gezeigt ist, umfasst die Montagevorrichtung in der weiteren bevorzugten Ausführungsform mindestens zwei Schwenkelemente 18, wobei die mindestens zwei Schwenkelemente 18 gelenkig mit dem Trägerelement 15 verbindbar ausgebildet und eingerichtet sind. Bei mindestens zwei Schwenkelementen 18 greifen diese bevorzugt an zwei unterschiedlichen Punkten des Trägerelements 15 an, um einen Positionswechsel zwischen den zwei Ausrichtungen 19, 20 auszubilden.

In bevorzugten Ausführungsformen sind die Stützelemente 16 im Wesentlichen orthogonal zum anzuordnenden Untergrund 17 ausgebildet und eingerichtet und/oder die Stützelemente 16 sind im Wesentlichen starr ausgebildet und eingerichtet. In den Fig. 1 bis Fig. 6 sind die Stützelemente 16 jeweils starr sowie im Wesentlichen orthogonal zum Untergrund 17 ausgerichtet. Der Untergrund 17 ist vorteilhafterweise eine im Wesentlichen ebene Fläche. Weiter bevorzugt verlaufen die Stützelemente 16 im Wesentlichen parallel zueinander, das heißt in derselben Ebene, und sind weiter bevorzugt diagonal zueinander auf dem Untergrund 17 anordenbar. In einer weiteren bevorzugten Ausführungsform ist das mindestens eine Schwenkelement 18 auf dem Untergrund 17 schwenkbar gelagert anordenbar, um eine zweiachsige Verschwenkbarkeit des mindestens einen Schwenkelements 18 auszubilden und einzurichten.

Die Montagevorrichtung 10 umfasst vorzugsweise mindestens eine Koppeleinrichtung 24, insbesondere vier Koppeleinrichtungen 24, wobei die mindestens eine Koppeleinrichtung 24 zum gelenkigen Verbinden eines distalen Endes 25 der Stützelemente 16 und/oder des mindestens einen Schwenkelements 18 mit dem Trägerelement 15 und/ oder einem Untergrund 17 ausgebildet und eingerichtet ist/sind. Wie sich insbesondere aus Fig. 2 ergibt, weisen in der Ausführungsform der erfindungsgemäßen Montagevorrichtung 10 die Stützelemente 16 an dem nach oben weisenden distalen Ende 25 jeweils eine Koppeleinrichtung 24 auf, die mit dem Trägerelement 15 bzw. mit der Trägerplatte 23 gelenkig verbunden sind. Ferner weisen die beiden Schwenkelemente 18 an den beiden distalen Enden 25 ebenfalls jeweils eine Koppeleinrichtung 24 auf, die einerseits ebenfalls mit dem Trägerelement 15 bzw. mit der Trägerplatte 23 gelenkig verbunden sind und andererseits mit dem Untergrund 17 gelenkig verbunden sind.

In bevorzugten Ausführungsformen, die in Fig. 2 im Detail dargestellt sind, ist die mindestens eine Koppeleinrichtung 24 jeweils als mindestens ein Schwenkgelenk 26 ausgebildet und eingerichtet ist, wobei das Trägerelement 15, die Stützelemente 16, das mindestens eine Schwenkelement 18 und/oder der Untergrund 17 jeweils mindestens einen Schwenkkörper 27 oder eine zur Anordnung des Schwenkkörpers 27 vorgesehene Schwenkkörperaufnahme 28 aufweisen, wobei der Schwenkkörper 27 oder die Schwenkkörperaufnahme 28 an den Stützelementen 16 und/oder an dem mindestens einen Schwenkelement 18 an mindestens einem der distalen Enden 25 angeordnet ist. Vorzugsweise ist mindestens eines der Schwenkgelenke 26 als Kugelgelenk 29 ausgebildet und eingerichtet.

In einer vorteilhaften, in den Fig. 1 bis Fig. 6 dargestellten Ausführungsform ist mindestens eines der Schwenkelemente 18 zur Längenänderung entlang der Längsausrichtung des jeweiligen Schwenkelements 18 ausgebildet und eingerichtet ist, wobei bei der Längenänderung mindestens eines der Schwenkelemente 18 eine Änderung der Ausrichtung des Trägerelements 15 ausführbar ist. Durch die Längenänderung ist insbesondere ein Wechsel zumindest von der ersten Ausrichtung 19 zur zweiten Ausrichtung 20 ausführbar. Auf der in Fig. 2 gezeigten Rückseite der Montagevorrichtung 10 sind die Schwenkelemente 18 im Detail gezeigt, woraus ersichtlich ist, dass diese jeweils entlang der Längsausrichtung veränderbar ausgebildet sind, wodurch ein entsprechendes Verschwenken des Trägerelements 15 erzeugbar ist, um die Ausrichtung eines darauf angeordneten flächigen Solarmoduls 11 zu verändern. Im Gegensatz zu Fig. 1 sind in Fig. 2 zwei Schwenkelemente 18 dargestellt, wobei hier vorzugsweise bei einer Längenänderung des einen Schwenkelements 18 automatisch eine Längenänderung des anderen Schwenkelements 18 erfolgt, wobei die eine Längenänderung eine Längenverkürzung des Schwenkelements 18 und die andere Längenänderung eine Längenverlängerung des anderen Schwenkelements 18 bewirkt.

Eine vorteilhafte Ausführungsform zeichnet sich dadurch aus, dass die Montagevorrichtung 10 mindestens ein Steuerelement 30 umfasst, das dazu ausgebildet und eingerichtet ist, die Längenänderung von mindestens einem der Schwenkelemente 18, insbesondere von zwei Schwenkelementen 18 im Wesentlichen gleichzeitig, derart zu steuern, dass das Trägerelement 15 zumindest zwischen der ersten Ausrichtung 19 und der zweiten Ausrichtung 20 veränderbar ist. Zur Erzeugung der Längenänderung und zur Ausbildung der Ausrichtungsänderung umfasst das mindestens eine Schwenkelement 18 bei der in der Fig. 2 und Fig. 4 gezeigten Ausführungsführung vorzugsweise mindestens ein Antriebselement 32, vorzugsweise einen elektrischen Motor, um eine Positionsänderung des flächigen Solarmoduls 11 auszubilden. Das Steuerelement 30 umfasst vorzugsweise wenigstens eine Kommunikationseinrichtung 35 zum Bereitstellen einer Kommunikation mit mindestens einem externen Eingabegerät zum Senden und/oder Empfangen von Daten. Solche Daten sind insbesondere Steuerungs-, Verbrauchs-, Umgebungs- und/oder Störungsdaten. Mittels der Kommunikationseinrichtung 35 ist vorzugsweise eine externe Steuerung und/oder Wartung der Montagevorrichtung 10, der Anordnung 12 bzw. der Energieanlage 14 möglich, ohne sich in deren unmittelbarer Nähe befinden zu müssen.

Die in Fig. 1, Fig. 3 und Fig. 5 dargestellte Ausführungsform der Montagevorrichtung umfasst ebenfalls mindestens ein Antriebselement 32. Das Antriebselement 32 erzeugt jedoch keine direkte Längenänderung des mindestens einen Schwenkelements 18, sondern bewegt die am Untergrund 17 angeordnete Koppeleinrichtung 24 entlang der X-Achse, welche die Kraft über das Schwenkelement 18 auf das Trägerelement 15 bzw. die Trägerplatte 23 überträgt. Das Trägerelement 15 bzw. die Trägerplatte 23 ist mit Stützelementen 16 am Untergrund 17 bzw. einem Grundkörper verbunden. Die Stützelemente 16 sind vorzugsweise manuell in der Höhe verstellbar, um den Neigungswinkel des Trägerelements 15 bzw. des darauf anzuordnenden flächigen Solarmoduls 11 einzustellen. Bei einem Verschieben des Schwenkelements 18 entlang der X-Achse mittels des mindestens einen Antriebselements 32 ist das flächige Solarmodul 11 zumindest zwischen der ersten Ausrichtung 19 und der zweiten Ausrichtung 20 veränderbar.

Vorzugsweise umfasst die Montagevorrichtung 10 weiter mindestens ein Sensorelement 31, wobei das mindestens eine Sensorelement 31 zur Erfassung der jeweiligen Ausrichtung des Trägerelements 15 und/oder des Verschwenkens mindestens eines der Schwenkelemente 18 ausgebildet und eingerichtet ist. In einer bevorzugten Ausführungsform ist das mindestens eine Sensorelement 31 mindestens ein Positionssensor 31, wobei mittels des Positionssensors 31 die Endpunkte der Ausrichtung erfassbar sind, um die Stabilität in der jeweiligen Ausrichtung zu erfassen und im Bedarfsfalls anzupassen.

Vorzugsweise weist die Montagevorrichtung weiter mindestens eine Stromversorgungseinrichtung sowie mindestens eine Kommunikationseinrichtung 35 auf. Die Spannungsversorgungeinrichtung kann vorzugsweise mittels einer externen Spannungsversorgung oder mittels einer Speichereinheit, beispielsweise einer Akkueinheit, bereitgestellt werden, um einerseits eine Veränderung der Ausrichtungen bereitzustellen und/oder um eine Spannungsversorgung der entsprechenden Steuerelemente 30 oder der Kommunikationseinrichtung 35 auszubilden. In einer vorteilhaften Ausführungsform wird der Strombedarf mittels des mindestens einen flächigen Solarmoduls 11 autark erzeugt und gegebenenfalls mittels entsprechender Wechselrichter etc. für die erforderlichen Bestandteile der Montagevorrichtung 10 nutzbar gemacht.

Weiter bevorzugt die Montagevorrichtung 10 derart an einem Untergrund 17 anordenbar, dass eine Veränderung des Trägerelements 15 zwischen der ersten Ausrichtung 19 und der zweiten Ausrichtung 20 jeweils mit einer Veränderung zwischen einer Süd- und einer Ost-Ausrichtung oder zwischen einer Süd- und einer West-Ausrichtung korrespondiert. Hierzu ist die jeweilige Montagevorrichtung 10 bei der jeweiligen Positionierung im bestimmungsgemäßen Gebrauch entsprechend der Himmelsrichtung so anzuordnen, dass die erste Ausrichtung 19 einer Ost-Ausrichtung oder einer West-Ausrichtung und die zweite Ausrichtung 20 einer Süd-Ausrichtung entspricht. Bei einer Änderung der Ausrichtungen kann somit jeweils eine Änderung der Anordnung des flächigen Solarmoduls 11 in Bezug auf die Sonneneinstrahlung aus der betreffenden Himmelsrichtung entsprechend eingestellt werden. Vorzugsweise ist eine automatische und/oder automatisierbare Steuerung des mindestens einen Schwenkelements 18 derart ausführbar ist, dass eine in Abhängigkeit von Sonnenstand und/oder Tageszeit vorgesehene Veränderung des Trägerelements 15 zwischen der ersten Ausrichtung 19 und der zweiten Ausrichtung 20 ausbildbar ist.

Die Montagevorrichtung 10 umfasst in bevorzugten Ausführungen mindestens einen zur Anordnung auf einem Untergrund 17 vorgesehenen Grundkörper 33, wobei der Grundkörper 33 zur Anordnung mindestens eines Stützelements 16 und/oder mindestens eines Schwenkelements 18 ausgebildet ist. Anders ausgedrückt ist der Grundkörper zur zumindest bereichsweisen Aufnahme der Koppeleinrichtungen 24 vorgesehen. Der Grundkörper 33 kann ebenfalls als Untergrund 17 angesehen werden, um die Montagevorrichtung 10 entsprechend zu positionieren. Vorzugsweise umfasst der Grundkörper 33 mindestens ein Beschwerungselement 34 und/oder mindestens ein zur Befestigung an einem Untergrund vorgesehenes - in den Figuren nicht im Detail gezeigtes - Verankerungselement. Das Beschwerungselement 34 dient zum Ballastieren des Grundkörpers 33, was in einer bevorzugten Ausführungsform mittels eines an den Grundkörper 33 angepassten Ballasttank erfolgt, welcher beispielsweise mit einer Flüssigkeit oder einem Streugut befüllt werden kann. Das Beschwerungselement 34 verringert zeitgleich den Freiraum unter der Montagevorrichtung 10, welches zu einer geringeren Windlastaufnahme führt. In den Fig.1 bis Fig. 6 ist die Montagevorrichtung 10 vorzugsweise als elektrische Montagevorrichtung 10 für Solarmodule 11, insbesondere für Photovoltaikmodule, ausgebildet. Der Untergrund 17 wird in den Fig. 1 bis Fig. 5 durch einen Grundkörper 33, beispielsweise aus einem Grundgestell gebildet, welches vorzugsweise das mindestens eine Steuerelement 30 sowie das mindestens eine Beschwerungselement 34 und/oder das Verankerungselement umfasst.

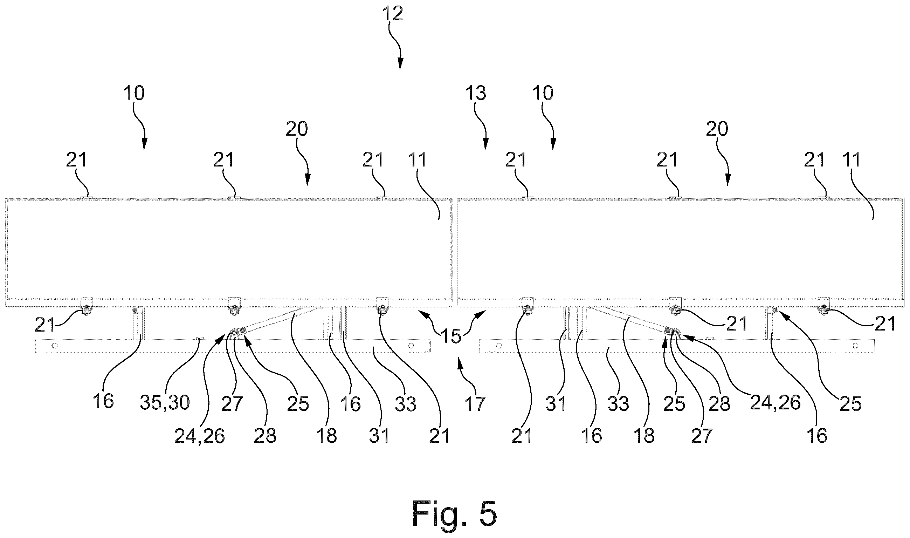

Im Folgenden wird die erfindungsgemäße Anordnung 12 umfassend zwei erfindungsgemäße Montagevorrichtungen 10 näher beschrieben, wobei die Montagevorrichtungen 10 jeweils zur Befestigung mindestens eines flächigen Solarmoduls 11 ausgebildet und eingerichtet sind. Die Fig. 4 und Fig. 5 zeigen jeweils zwei Ausführungsformen der erfindungsgemäßen Anordnungen 12. Bevorzugt sind die zwei Montagevorrichtungen 10 im Wesentlichen gegenüberliegend angeordnet, derart, dass eine Veränderung des Trägerelements 15 der ersten Montagevorrichtung 10 zwischen einer ersten Ausrichtung 19 und einer zweiten Ausrichtung 20 jeweils eine Veränderung zwischen einer Süd- und einer Ost-Ausrichtung ausbildet und einrichtet, und dass eine Veränderung des Trägerelements 15 der zweiten Montagevorrichtung 10 zwischen einer ersten Ausrichtung 19 und einer zweiten Ausrichtung 20 jeweils mit eine Veränderung zwischen einer Süd-Ausrichtung und einer West-Ausrichtung ausbildet und einrichtet, um eine Veränderung der Trägerelemente 15 zwischen einer Süd-Ausrichtung und einer Ost-West-Ausrichtung auszubilden und einzurichten. Vorzugsweise sind hierzu die zwei Montagevorrichtungen 10, wie in der Fig. 4 und Fig. 5 gezeigt, gespiegelt zueinander ausgebildet. Die Funktion der Veränderung der jeweiligen Ausrichtungen ist ebenfalls gespiegelt zueinander. Dies ermöglicht somit die Ausrichtung Ost-Süd-West. Nachfolgend wird die erfindungsgemäße in Fig. 5 gezeigte Solarmodulanordnung 13 erläutert. Die Solarmodulanordnung 13 umfasst mindestens eine erfindungsgemäße Anordnung 12 und mindestens zwei flächige Solarmodule 11 zur Erzeugung elektrischer Energie und/oder thermischer Energie, wobei die Solarmodule 11 zwischen einer Süd- und einer West-Ausrichtung oder zwischen einer Süd- und einer Ost-Ausrichtung veränderlich ausgebildet und eingerichtet sind.

Weiter wird nachfolgend die erfindungsgemäße Energieanlage 14 zur Erzeugung elektrischer Energie und/oder thermischer Energie, umfassend eine Mehrzahl von miteinander in Wirkverbindung stehender Solarmodulanordnungen 13 erläutert. Derartige - in den Figuren nicht dargestellte - Energieanlagen 14 umfassen eine Mehrzahl von vorzugsweise in Reihe angeordneten in Fig. 5 oder Fig. 6 gezeigten Solarmodulanordnungen 13.

Zur Vermeidung von Wiederholungen wird im Zusammenhang mit der erfindungsgemäßen Anordnung 12, der erfindungsgemäßen Solarmodulanordnung 13 und der Energieanlage 14 insbesondere auf die bereits im Zusammenhang mit der erfindungsgemäßen Montagevorrichtung 10 im Detail dargelegte Figurenbeschreibung verwiesen. Diese gelten in analoger Weise auch für die erfindungsgemäße Anordnung 12, die erfindungsgemäße Solarmodulanordnung 13 und die Energieanlage 14.

## Patentansprüche

1. Montagevorrichtung (10) zur Anordnung mindestens eines flächigen Solarmoduls (11) zur Erzeugung elektrischer Energie und/oder thermischer Energie, umfassend
ein Trägerelement (15), das zur Aufnahme mindestens eines flächigen Solarmoduls (11) ausgebildet und eingerichtet ist,
zwei mit dem Trägerelement (15) gelenkig verbindbare Stützelemente (16), die zur Anordnung auf einem Untergrund (17) vorgesehen sind, wobei die zwei Stützelemente (16) jeweils eine unterschiedliche Stützhöhe (S_{H1}, S_{H2}) aufweisen,
mindestens ein mit dem Trägerelement (15) gelenkig verbindbares Schwenkelement (18), das zur Anordnung auf einem Untergrund (17) vorgesehen ist, wobei das mindestens eine Schwenkelement (18) zum Verschwenken des Trägerelements (15) zwischen einer ersten Ausrichtung (19) und einer zweiten Ausrichtung (20) ausgebildet und zum Verändern einer Ausrichtung mindestens eines flächigen Solarmoduls (11) eingerichtet ist.

2. Montagevorrichtung (10) nach Anspruch 1, **dadurch gekennzeichnet, dass** die Montagevorrichtung (10) mindestens zwei Schwenkelemente (18) umfasst, wobei die mindestens zwei Schwenkelemente (18) gelenkig mit dem Trägerelement (15) verbindbar ausgebildet und eingerichtet sind.

3. Montagevorrichtung (10) nach Anspruch 1 oder 2, **dadurch gekennzeichnet, dass** die Stützelemente (16) im Wesentlichen orthogonal zum anzuordnenden Untergrund (17) ausgebildet und eingerichtet sind und/oder dass die Stützelemente (16) im Wesentlichen starr ausgebildet und eingerichtet sind.

4. Montagevorrichtung (10) nach einem oder mehreren der Ansprüche 1 bis 3,
**dadurch gekennzeichnet, dass** das mindestens eine Schwenkelement (18) auf dem Untergrund (17) schwenkbar gelagert anordenbar ist, um eine zweiachsige Verschwenkbarkeit des mindestens einen Schwenkelements (18) auszubilden und einzurichten.

5. Montagevorrichtung (10) nach einem oder mehreren der Ansprüche 1 bis 4, weiter umfassend mindestens eine Koppeleinrichtung (24), insbesondere vier Koppeleinrichtungen (24), wobei die mindestens eine Koppeleinrichtung (24) zum gelenkigen Verbinden eines distalen Endes (25) der Stützelemente (16) und/oder des mindestens einen Schwenkelements (18) mit dem Trägerelement (15) und/oder einem Untergrund (17) ausgebildet und eingerichtet ist/sind.

6. Montagevorrichtung (10) nach einem oder mehreren der Ansprüche 1 bis 5, **dadurch gekennzeichnet, dass** die mindestens eine Koppeleinrichtung (24) jeweils als mindestens ein Schwenkgelenk (26) ausgebildet und eingerichtet ist, wobei das Trägerelement (15), die Stützelemente (16), das mindestens eine Schwenkelement (18) und/oder der Untergrund (17) jeweils mindestens einen Schwenkkörper (27) oder eine zur Anordnung des Schwenkkörpers (27) vorgesehene Schwenkkörperaufnahme (28) aufweisen, wobei der Schwenkkörper (27) oder die Schwenkkörperaufnahme (28) an den Stützelementen (16) und/oder an dem mindestens einen Schwenkelement (18) an mindestens einem der distalen Enden (25) angeordnet ist.

7. Montagevorrichtung (10) nach einem oder mehreren der Ansprüche 1 bis 6, **dadurch gekennzeichnet, dass** mindestens eines der Schwenkgelenke (26) als Kugelgelenk (29) ausgebildet und eingerichtet ist.

8. Montagevorrichtung (10) nach einem oder mehreren der Ansprüche 1 bis 7, **dadurch gekennzeichnet, dass** mindestens eines der Schwenkelemente (18) zur Längenänderung entlang der Längsausrichtung des jeweiligen Schwenkelements (18) ausgebildet und eingerichtet ist, wobei bei der Längenänderung mindestens eines der Schwenkelemente (18) eine Änderung der Ausrichtung des Trägerelements (15) ausführbar ist.

9. Montagevorrichtung (10) nach einem oder mehreren der Ansprüche 2 bis 8, **dadurch gekennzeichnet, dass** bei einer Längenänderung des einen Schwenkelements (18) automatisch eine Längenänderung des weiteren Schwenkelements (18) erfolgt, wobei die eine Längenänderung eine Längenverkürzung des Schwenkelements (18) und die andere Längenänderung eine Längenverlängerung des weiteren Schwenkelements (18) bewirkt.

10. Montagevorrichtung (10) nach einem oder mehreren der Ansprüche 1 bis 9, **dadurch gekennzeichnet, dass** die Montagevorrichtung (10) mindestens ein Steuerelement (30) umfasst, das dazu ausgebildet und eingerichtet ist, die Längenänderung von mindestens einem der Schwenkelemente (18), insbesondere von zwei Schwenkelementen (18) gleichzeitig, derart zu steuern, dass das Trägerelement (15) zumindest zwischen der ersten Ausrichtung (19) und der zweiten Ausrichtung (20) veränderbar ist.

11. Montagevorrichtung (10) nach einem oder mehreren der Ansprüche 1 bis 10, weiter umfassend mindestens ein Sensorelement (31), wobei das mindestens eine Sensorelement (31) zur Erfassung der jeweiligen Ausrichtung des Trägerelements (15) und/oder des Verschwenkens mindestens eines der Schwenkelemente (18) ausgebildet und eingerichtet ist.

12. Montagevorrichtung (10) nach einem oder mehreren der Ansprüche 1 bis 11, **dadurch gekennzeichnet, dass** die Montagevorrichtung (10) derart an einem Untergrund (17) anordenbar ist, dass eine Veränderung des Trägerelements (15) zwischen der ersten Ausrichtung (19) und der zweiten Ausrichtung (20) jeweils mit einer Veränderung zwischen einer Süd- und einer Ost-Ausrichtung oder zwischen einer Süd- und einer West-Ausrichtung korrespondiert.

13. Montagevorrichtung (10) nach einem oder mehreren der Ansprüche 1 bis 12, **dadurch gekennzeichnet, dass** eine automatische und/oder automatisierbare Steuerung des mindestens einen Schwenkelements (18) derart ausführbar ist, dass eine in Abhängigkeit von Sonnenstand und/oder Tageszeit vorgesehene Veränderung des Trägerelements (15) zwischen der ersten Ausrichtung (19) und der zweiten Ausrichtung (20) ausbildbar ist.

14. Montagevorrichtung (10) nach einem oder mehreren der Ansprüche 1 bis 13, weiter umfassend mindestens einen zur Anordnung auf einem Untergrund (17) vorgesehenen Grundkörper (33), wobei der Grundkörper (33) zur Anordnung mindestens eines Stützelements (16) und/oder mindestens eines Schwenkelements (18) ausgebildet ist.

15. Montagevorrichtung (10) nach Anspruch 14, **dadurch gekennzeichnet, dass** der Grundkörper (33) mindestens ein Beschwerungselement (34) und/oder mindestens ein zur Befestigung an einem Untergrund (17) vorgesehenes Verankerungselement umfasst.

16. Anordnung (12) umfassend zwei Montagevorrichtungen (10) nach einem oder mehreren der Ansprüche 1 bis 15, wobei die Montagevorrichtungen (10) jeweils zur Befestigung mindestens eines flächigen Solarmoduls (11) ausgebildet und eingerichtet sind.

17. Anordnung nach Anspruch 16, **dadurch gekennzeichnet, dass** die zwei Montagevorrichtungen (10) im Wesentlichen gegenüberliegend angeordnet sind, derart, dass eine Veränderung des Trägerelements (15) der ersten Montagevorrichtung (10) zwischen einer ersten Ausrichtung (19) und einer zweiten Ausrichtung (20) jeweils mit einer Veränderung zwischen einer Süd- und einer Ost-Ausrichtung ausgebildet und eingerichtet ist, und dass eine Veränderung des Trägerelements (15) der zweiten Montagevorrichtung (10) zwischen einer ersten Ausrichtung (19) und einer zweiten Ausrichtung (20) jeweils mit einer Veränderung zwischen einer Süd-Ausrichtung und einer West-Ausrichtung ausgebildet und eingerichtet ist, um eine Veränderung der Trägerelemente (15) zwischen einer Süd-Ausrichtung und einer Ost-West-Ausrichtung auszubilden und einzurichten.

18. Solarmodulanordnung (13) umfassend mindestens eine Anordnung (12) gemäß einem oder mehreren der Ansprüche 16 und 17, und mindestens zwei Solarmodule (11) zur Erzeugung elektrischer Energie und/oder thermischer Energie, wobei die Solarmodule (11) zwischen einer Süd- und einer West-Ausrichtung oder zwischen einer Süd- und einer Ost-Ausrichtung veränderlich ausgebildet und eingerichtet sind.

19. Energieanlage (14) zur Erzeugung elektrischer Energie und/oder thermischer Energie umfassend eine Mehrzahl von miteinander in Wirkverbindung stehender Solarmodulanordnungen (13) nach Anspruch 18.
